# EUROPÄISCHE PATENTANMELDUNG

(11) **EP 2 708 791 A2**
(43) Veröffentlichungstag der Anmeldung: **19.03.2014**
(21) Anmeldenummer: 13184678.4
(22) Anmeldetag: 17.09.2013
(51) Int. Cl.: F16M 11/04, F16M 13/00

(54) **Schnellspannvorrichtung für ein optisches Gerät**

(30) Priorität: 18.09.2012 DE 102012018375
(71) Anmelder: CULLMANN GERMANY GmbH, 90579 Langenzenn (DE)
(72) Erfinder:
(74) Vertreter: Louis Pöhlau Lohrentz

(57) **Zusammenfassung**

Es wird eine Schnellspannvorrichtung (1) für ein optisches Gerät, insbesondere ein fototechnisches oder filmtechnisches Gerät, beschrieben, mit einer Klemmeinrichtung mit einer daran feststellbaren Kupplungsplatte (12) für das Gerät, wobei die Klemmplatteneinrichtung eine prismenförmige Kulissenführung, im folgenden Schwalbenschwanzführung genannt, mit seitlichen Wänden und einer Grundfläche aufweist. Eine erste Kulisse der Schwalbenschwanzführung ist als ein aus der Oberseite der Klemmplatte (11) hervorspringender wandförmiger erster Seitenabschnitt ausgebildet, eine zweite Kulisse der Schwalbenschwanzführung weist eine von einer Führungsstellung in eine Klemmstellung verschiebbare Druckplatte (15) auf. Die von der ersten Kulisse abgewandte Seitenfläche der Klemmplatte (11) bildet eine unter einem spitzen Winkel zur Grundfläche geneigte Führungsfläche für die Druckplatte (15). Die Druckplatte (15) ist längs der Führungsfläche von der Führungsstellung in eine Offenstellung verschiebbar. Die Klemmplatte (11) und/oder die Kupplungsplatte (12, 120) sind bzw. ist als Strangpressteil ausgebildet.

## Beschreibung

Die Erfindung betrifft eine Schnellspannvorrichtung für ein optisches Gerät.

Zur raschen Befestigung von Geräten auf einem Stativ oder dergleichen sind Schnellspannvorrichtungen bekannt.

Aus der DE 32 17 122 C2 ist eine Schnellkupplung für das Verbinden eines fotooptischen oder sonstigen Gerätes mit einer Auflage, Stativ oder dergleichen bekannt. Die Schnellkupplung weist eine Klemmplatte auf, die als eine einstückige prismenförmige Kulissenführung mit seitlichen Wänden ausgebildet ist. Eine Kupplungsplatte für das Gerät wird seitlich in die Kulissenführung eingeführt und ist dort verschiebbar gelagert. Die Kupplungsplatte ist durch eine Fixiervorrichtung festlegbar. Die Fixiervorrichtung ist als eine Exzenterklemme ausgebildet.

Aufgabe der vorliegenden Erfindung ist es, eine Schnellspannvorrichtung anzugeben, die mit geringem Fertigungsaufwand herstellbar ist.

Erfindungsgemäß wird diese Aufgabe mit dem Gegenstand des Anspruchs 1 gelöst. Es wird eine Schnellspannvorrichtung für ein optisches Gerät, insbesondere ein fototechnisches oder filmtechnisches Gerät, vorgeschlagen mit einer Klemmeinrichtung mit einer daran feststellbaren Kupplungsplatte für das Gerät,
wobei die Klemmplatteneinrichtung eine prismenförmige Kulissenführung, im folgenden Schwalbenschwanzführung genannt, mit seitlichen Wänden und einer Grundfläche aufweist,
wobei vorgesehen ist,
dass eine erste Kulisse der Schwalbenschwanzführung als ein aus der Oberseite der Klemmplatte hervorspringender wandförmiger erster Seitenabschnitt ausgebildet ist,
dass eine zweite Kulisse der Schwalbenschwanzführung eine von einer Führungsstellung in eine Klemmstellung verschiebbare Druckplatte aufweist, dass die von der ersten Kulisse abgewandte Seitenfläche der Klemmplatte eine unter einem spitzen Winkel zur Grundfläche geneigte Führungsfläche für die Druckplatte bildet,
dass die Druckplatte längs der Führungsfläche von der Führungsstellung in eine Offenstellung verschiebbar ist, und
dass die Klemmplatte und/oder die Kupplungsplatte als Strangpressteil ausgebildet sind bzw. ist.

Durch die Ausbildung der Klemmplatte und/oder der Kupplungsplatte als Strangpressteil ist eine sehr rationelle Fertigung möglich, wobei die Strangpressteile von einem Strangpressprofil abgeteilt werden und ggf. die stirnseitigen Kanten bearbeitet werden. Vorteilhafterweise kann es sich um ein Strangpressprofil aus einer Aluminium-Legierung handeln.

Es kann vorgesehen sein, dass die Druckplatte ein Langloch aufweist, das von einer mit einer Betätigungshandhabe drehstarr verbundenen Klemmschraube durchgriffen ist, die in ein Gewindeloch der Klemmplatte eingreift. Das Langloch kann in Betätigungsrichtung der Druckplatte erstreckt sein.

Weiter kann vorgesehen sein, dass zwischen der Betätigungshandhabe und der Druckplatte ein Druckstück angeordnet ist. Vorteilhafterweise kann ein zylinderförmiges Druckstück vorgesehen sein, dessen der Druckplatte zugewandte Stirnfläche so abgeschrägt ist, dass sie vollflächig auf der Druckplatte aufliegt.

Die Druckplatte kann eine an einer Längsseite des Langlochs angeordnete nutförmige Ausnehmung aufweisen, die zusammen mit einer in der Klemmplatte ausgebildeten Ausnehmung einen Aufnahmeraum für Schraubendruckfedern bilden.

In einer vorteilhaften Ausbildung kann vorgesehen sein, dass die Druckplatte zwei zu beiden Längsseiten des Langlochs angeordnete nutförmige Ausnehmungen aufweist, die zusammen mit in der Klemmplatte ausgebildeten Ausnehmungen Aufnahmeräume für Schraubendruckfedern bilden. Durch die vorzugsweise symmetrische Anordnung von zwei Druckfedern an den Längsseiten wird erreicht, dass beim Verschieben der Druckplatte kein Kippen der Druckplatte eintritt.

Es kann vorgesehen sein, dass an den seitlichen Stirnflächen der Druckplatte Griffmulden ausgebildet sind.

Die Kupplungsplatte kann ein Langloch aufweist, das sich parallel zur Schwalbenschwanzführung erstreckt.

In einer vorteilhaften Ausbildung kann vorgesehen sein, dass das Langloch an mindestens einer Stelle eine runde Erweiterung aufweist.

Die runde Erweiterung kann als ein als ein Gewindeloch ausgebildet sein. Mit einer als Schaftschraube mit einem hervorspringenden Gewindeabschnitt ausgebildeten geräteseitigen Befestigungsschraube ist so das Verlieren der Befestigungsschraube verhindert. Die Befestigungsschraube ist im voll eingedrehten Zustand durch den vorspringenden Gewindeabschnitt gegen Herausfallen aus dem Langloch gesichert.

Die Erfindung wird nun anhand von Ausführungsbeispielen näher erläutert. Es zeigen
- Fig. 1: ein Ausführungsbeispiel der erfindungsgemäßen Schnellspannvorrichtung in perspektivischer Darstellung;
- Fig. 2: die Schnellspannvorrichtung in Fig. 1 mit abgenommener Kupplungsplatte;
- Fig. 3: eine erste Schnittansicht der Schnellspannvorrichtung in Fig. 1;
- Fig. 4: eine zweite Schnittansicht der Schnellspannvorrichtung in Fig. 1.
- Fig. 5a bis 5e: die Schnellspannvorrichtung in Fig. 1 in unterschiedlichen Betätigungsschritten;
- Fig. 6: ein zweites Ausführungsbeispiel der Kupplungsplatte in Fig. 1;
- Fig. 7: die Schnellspannvorrichtung in Fig. 1, montiert auf einem Stativkopf.

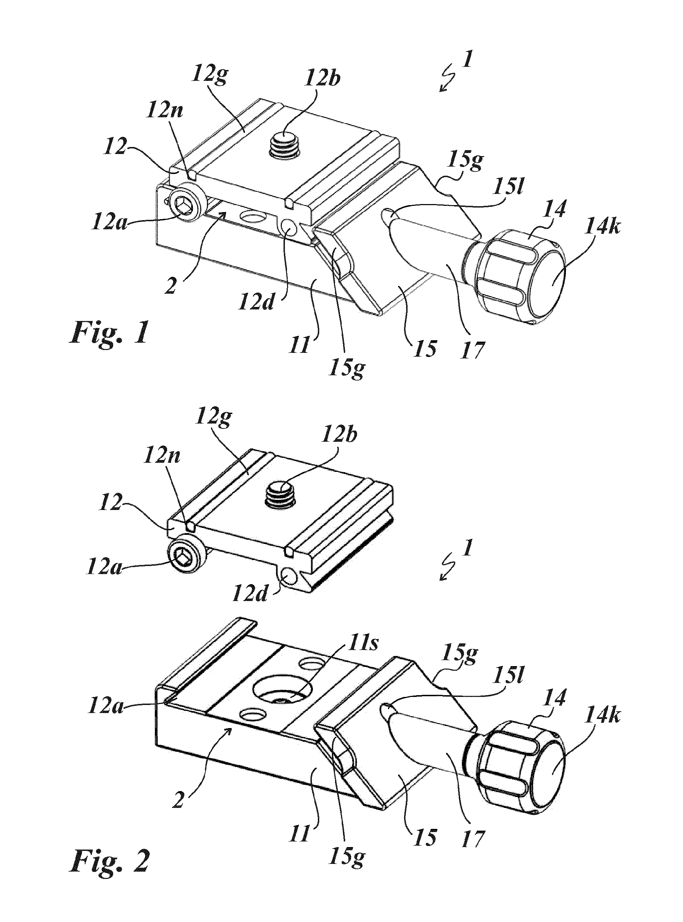

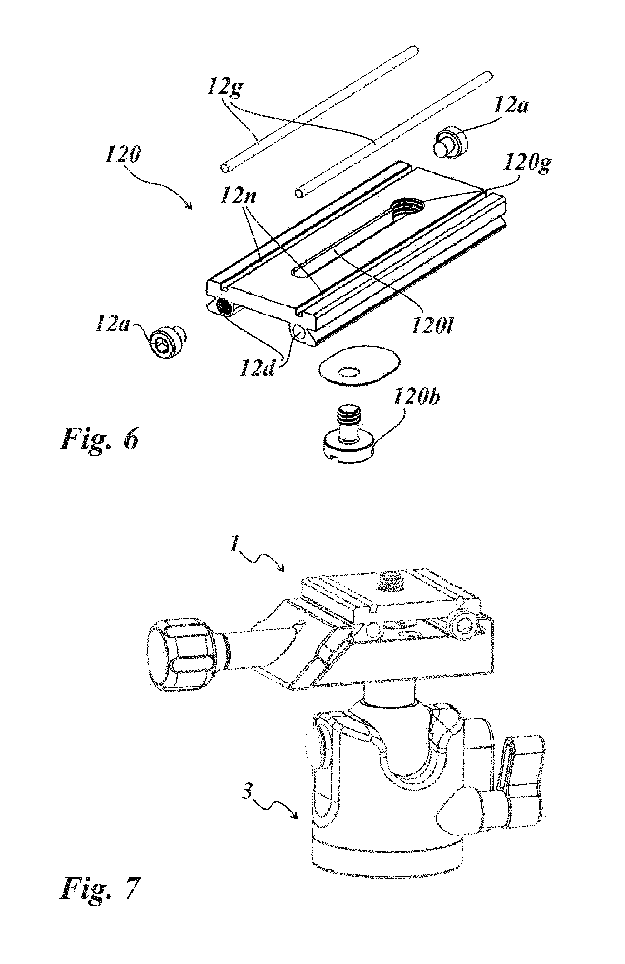

Fig. 1 bis 4 zeigen eine Schnellspannvorrichtung 1 mit einer Klemmplatte 11, die mit einem zentralen Gewindesackloch 11 s (Fig. 2) zur Aufnahme einer Stativschraube 11 s zur Befestigung der Schnellspannvorrichtung 1 an einem Stativkopf 3 ausgebildet ist (siehe Fig. 7). Die Klemmplatte 11 bildet das Gestell der Schnellspannvorrichtung 1, die weiter eine Kupplungsplatte 12 für ein optisches Gerät, beispielsweise ein Photoapparat oder eine Filmkamera, aufweist. Die Kupplungsplatte 12 ist mit dem besagten optischen Gerät über eine in einem Gewindesackloch aufgenommene Befestigungsschraube 12b lösbar verbindbar, wobei die Kupplungsplatte 12 während des Einsatzes des Geräts vorzugsweise mit dem Gerät verbunden bleibt.

Die Klemmplatte 11 weist im Wesentlichen einen rechteckförmigen Grundriss auf und ist aus einem Strangpressprofil ausgebildet. Die Klemmplatte 11 weist ein Gewindesackloch 11 s zur Aufnahme einer bodenseitigen Befestigungsschraube 11 b auf, die zur Montage auf einem Stativkopf vorgesehen ist (siehe auch Fig. 7). Die Klemmplatte 11 ist Teil einer prismenförmigen Kulissenführung mit seitlichen Wänden und einer Grundfläche. Die Kulissenführung ist zur Führung und Klemmung der Kupplungsplatte 12 vorgesehen. In dem in den Fig. 1 bis 7 dargestellten Ausführungsbeispiel ist die Kulissenführung als eine Schwalbenschwanzführung 2 ausgebildet. Die Oberseite der Klemmplatte 11 bildet die Grundfläche der Schwalbenschwanzführung 2. Eine erste Kulisse der Schwalbenschwanzführung ist als ein aus der Oberseite der Klemmplatte 11 hervorspringender wandförmiger erster Seitenabschnitt ausgebildet, der an der Innenseite mit einer für die Schwalbenschwanzführung charakteristischen im Querschnitt dreieckförmigen Nut ausgebildet ist. Die eine Fläche der Nut fluchtet mit der Oberseite der Klemmplatte 11, die andere Fläche der Nut ist zur Oberseite geneigt und schließt mit ihr einen spitzen Winkel ein. Die geneigte andere Fläche bildet eine erste Anschlags- und Führungsfläche für die Kupplungsplatte 12.

Die Kupplungsplatte 12 ist wie die Klemmplatte 11 aus einem Strangpressprofil ausgebildet. Ein plattenförmiger Grundkörper weist an seinem Bodenabschnitt zwei voneinander beabstandete prismatische Führungsabschnitte auf, die von einem Durchgangsloch 12d durchgriffen sind. Eines der Durchgangslöcher 12d ist zumindest an beiden Endabschnitten mit einem Innengewinde ausgebildet, in das Anschlagschrauben 12a eingeschraubt sind. Die über die bodenseitigen Stirnflächen der Führungsabschnitte hervorstehenden Schraubenköpfe der Anschlagschrauben 12a bilden Anschläge, die den Führungsweg der Kupplungsplatte 12 begrenzen.

Die Oberseite des plattenförmigen Grundkörpers der Kupplungsplatte 12 weist zwei Nuten 12n auf, in die jeweils ein Gummifaden 12g eingelegt ist, der zur Verbesserung des Haftsitzes zwischen der Kupplungsplatte und einem mit der Kupplungsplatte verbundenen optischen Gerät vorgesehen ist.

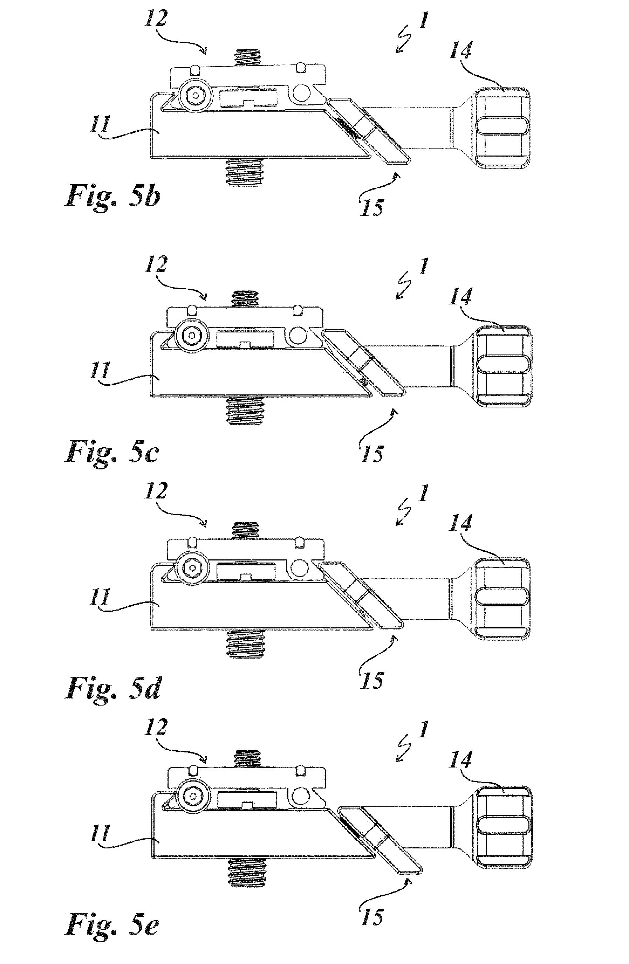

Eine zweite Kulisse der Schwalbenschwanzführung 2 ist als eine bewegliche Druckplatte 15 ausgebildet, die an einem dem vorgenannten Seitenabschnitt gegenüberliegenden zweiten Seitenabschnitt der Klemmplatte 11 gleitbar ausgebildet ist und eine zweite Anschlags- und Führungsfläche für die Kupplungsplatte 12 bildet. Der zweite Seitenabschnitt der Klemmplatte 11 ist zur Oberseite der Klemmplatte geneigt und schließt mit ihr einen spitzen Winkel ein, der betragsgleich zu dem Nutwinkel an dem ersten Seitenabschnitt der Klemmplatte 11 ist. An den seitlichen Stirnflächen der Druckplatte 15 sind Griffmulden 15g ausgebildet, deren Funktion weiter unten in Fig. 5e beschrieben wird.

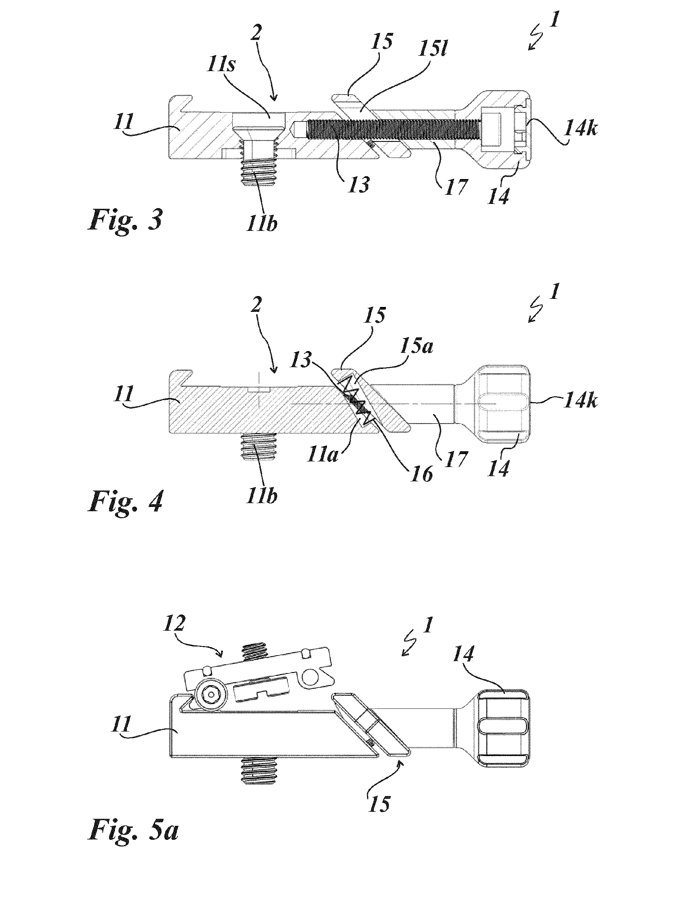

Die Druckplatte 15 weist ein Langloch 15l auf, das von einer Klemmschraube 13 durchgriffen ist (Fig. 3).

Die Druckplatte 15 weist weiter zwei zu beiden Längsseiten des Langlochs angeordnete nutförmige Ausnehmungen 15a auf, die mit in der Klemmplatte 11 ausgebildeten Ausnehmungen 11a Aufnahmeräume für Schraubendruckfedern 16 bilden (Fig. 4). Die Schraubendruckfedern 16 bringen die Druckplatte 15 in eine Lage, in der ein Abschnitt der Druckplatte 15 über die Oberseite der Klemmplatte 11 hervorsteht und die weiter oben beschriebene zweite Anschlags- und Führungsfläche für die Kupplungsplatte 12 bildet. Dabei liegt der untere Abschnitt des Langlochs 15l am Außenumfang der Klemmschraube 13 an.

Die Klemmschraube 13 ist in ein bodenseitiges Gewindeloch einer in einem Betätigungsknopf 14 ausgebildeten Ausnehmung eingeschraubt, wobei der Kopf der Klemmschraube 14 auf dem Boden der Ausnehmung aufliegt. Die Ausnehmung im Betätigungsknopf 14 ist durch eine Kopfplatte 14k verschlossen.

Zwischen der bodenseitigen Stirnseite des Betätigungsknopfes 14 und der Druckplatte 15 ist ein zylinderförmiges Druckstück 17 angeordnet, das von der Klemmschraube 13 durchgriffen ist und die durch die Klemmschraube 13 ausgebildete Klemmkraft auf die Druckplatte 15 überträgt. Die der Druckplatte 15 zugewandte Stirnfläche des Druckstücks 17 ist so abgeschrägt, dass sie vollflächig auf der Druckplatte 15 aufliegt.

Die Fig. 5a bis 5e zeigen die Funktion der Schnellspannvorrichtung 1 im Einzelnen.
- Fig. 5a:: Die Kupplungsplatte 12 ist einseitig in die Schwalbenschwanzführung 2 eingesetzt.
- Fig. 5b:: Beim Niederdrücken der Kupplungsplatte 12 gelangt diese in Kontakt mit einem Kantenabschnitt der Druckplatte 15, wodurch die Druckplatte 15 an der abgeschrägten Stirnseite der Klemmplatte 11 heruntergleitet und die in Fig. 5 nicht dargestellten Druckfedern 16 gespannt werden.
- Fig. 5c:: Sobald die Kupplungsplatte 12 auf der Klemmplatte 11 zur Anlage kommt, gleitet die Druckplatte 15 unter Wirkung der Druckfedern 16 in ihre Ausgangslage zurück und bildet die zweite Anschlags- und Führungsfläche für die Kupplungsplatte 12. Die Kupplungsplatte 12 ist gegenüber der Klemmplatte 11 verschiebbar, ist jedoch in der nun geschlossenen Schwalbenschwanzführung 2 gegen Herausfallen gesichert.
- Fig. 5d:: Die Kupplungsplatte 12 ist durch Anziehen der Klemmschraube 13 auf der Klemmplatte 11 geklemmt.
- Fig. 5e:: Die Klemmung ist durch Lösen der Klemmschraube 13 beseitigt, und die Druckplatte 15 ist gegenüber der Klemmplatte 11 gegen die Wirkung der Druckfedern 16 nach unten gezogen, wodurch die Kupplungsplatte 12 freigegeben ist und entnommen werden kann. Das Zurückziehen der Druckplatte 15 ist durch die an den seitlichen Stirnflächen der Druckplatte ausgebildeten Griffmulden 15g erleichtert (siehe Fig. 1 und 2).

Fig. 6 zeigt ein zweites Ausführungsbeispiel der Kupplungsplatte. Eine längliche Kupplungsplatte 120 ist als eine Justierplatte ausgebildet, die eine Lageeinstellung des optischen Gerätes auf der Kupplungsplatte ermöglicht. Die Kupplungsplatte 120 ist wie die weiter oben beschriebene Kupplungsplatte 12 ausgebildet, mit dem Unterschied, dass ein Gewindeloch 120g in ein Langloch 120l übergeht, das zur Aufnahme einer als Schaftschraube ausgebildeten geräteseitigen Befestigungsschraube 120b vorgesehen ist und dessen Breite kleiner als der Durchmesser des Gewindelochs 120g ist. Der Gewindeabschnitt der Befestigungsschraube 120b springt gegenüber dem Schaft vor. Die Befestigungsschraube 120b ist in bekannter Weise als eine unverlierbare Befestigungsschraube ausgebildet, weil sie im voll eingedrehten Zustand durch den vorspringenden Gewindeabschnitt 120g gegen Herausfallen aus dem Langloch 120l gesichert ist.

Fig. 7 zeigt die in Fig. 1 bis 4 beschriebene Schnellspannvorrichtung 1 auf einem Stativkopf 3 montiert. Der Stativkopf 3 ist zur Montage auf einem nicht dargestellten Stativ vorgesehen und als ein Kugelkopf ausgebildet, der eine Ausrichtung eines auf der Schnellspannvorrichtung 1 montierten optischen Gerätes (nicht dargestellt) in drei Achsen ermöglicht.

### Bezugszeichenliste

- 1: Schnellspannvorrichtung
- 2: Schwalbenschwanzführung
- 3: Stativkopf
- 11: Klemmplatte
- 11a: Ausnehmung
- 11b: Befestigungsschraube
- 11s: Gewindesackloch
- 12: Kupplungsplatte
- 12a: Anschlagschraube
- 12b: Befestigungsschraube
- 12d: Durchgangsloch
- 12g: Gummifaden
- 12n: Nut
- 13: Klemmschraube
- 14: Betätigungsknopf
- 14k: Verschlussplatte
- 15: Druckplatte
- 15a: Ausnehmung
- 15g: Griffmulde
- 15l: Langloch
- 16: Druckfeder
- 17: Druckstück
- 120: Kupplungsplatte
- 120b: Befestigungsschraube
- 120g: Gewindeloch
- 120l: Langloch

## Patentansprüche

1. Schnellspannvorrichtung (1) für ein optisches Gerät, insbesondere ein fototechnisches oder filmtechnisches Gerät,
mit einer Klemmeinrichtung mit einer daran feststellbaren Kupplungsplatte (12) für das Gerät,
wobei die Klemmplatteneinrichtung eine prismenförmige Kulissenführung, im folgenden Schwalbenschwanzführung genannt, mit seitlichen Wänden und einer Grundfläche aufweist,
wobei vorgesehen ist,
dass eine erste Kulisse der Schwalbenschwanzführung als ein aus der Oberseite der Klemmplatte (11) hervorspringender wandförmiger erster Seitenabschnitt ausgebildet ist,
dass eine zweite Kulisse der Schwalbenschwanzführung eine von einer Führungsstellung in eine Klemmstellung verschiebbare Druckplatte (15) aufweist,
dass die von der ersten Kulisse abgewandte Seitenfläche der Klemmplatte (11) eine unter einem spitzen Winkel zur Grundfläche geneigte Führungsfläche für die Druckplatte (15) bildet,
dass die Druckplatte (15) längs der Führungsfläche von der Führungsstellung in eine Offenstellung verschiebbar ist, und dass die Klemmplatte (11) als Strangpressteil ausgebildet ist.

2. Schnellspannvorrichtung nach Anspruch 1,
**dadurch gekennzeichnet,**
**dass** die Druckplatte (15) ein Langloch (15l) aufweist, das von einer mit einer Betätigungshandhabe (14) drehstarr verbundenen Klemmschraube (13) durchgriffen ist, die in ein Gewindeloch der Klemmplatte (11) eingreift,

3. Schnellspannvorrichtung nach Anspruch 2,
**dadurch gekennzeichnet,**
**dass** zwischen der Betätigungshandhabe (14) und der Druckplatte (15) ein Druckstück (17) angeordnet ist.

4. Schnellspannvorrichtung nach Anspruch 1 oder 2,
**dadurch gekennzeichnet,**
**dass** die Druckplatte (15) eine an einer Längsseite des Langlochs (15l) angeordnete nutförmige Ausnehmung (15a) aufweist, die zusammen mit einer in der Klemmplatte (11) ausgebildeten Ausnehmung (11a) einen Aufnahmeraum für Schraubendruckfedern (16) bilden.

5. Schnellspannvorrichtung nach Anspruch 4,
**dadurch gekennzeichnet,**
**dass** die Druckplatte (15) zwei zu beiden Längsseiten des Langlochs (15l) angeordnete nutförmige Ausnehmungen (15a) aufweist, die zusammen mit in der Klemmplatte (11) ausgebildeten Ausnehmungen (11 a) Aufnahmeräume für Schraubendruckfedern (16) bilden.

6. Schnellspannvorrichtung nach einem der vorangehenden Ansprüche,
**dadurch gekennzeichnet,**
**dass** an den seitlichen Stirnflächen der Druckplatte (15) Griffmulden (15g) ausgebildet sind.

7. Schnellspannvorrichtung nach einem der vorangehenden Ansprüche,
**dadurch gekennzeichnet,**
**dass** die Kupplungsplatte (12) ein Langloch aufweist, das sich parallel zur Schwalbenschwanzführung erstreckt.

8. Schnellspannvorrichtung nach Anspruch 7,
**dadurch gekennzeichnet,**
**dass** das Langloch (120l) an mindestens einer Stelle eine runde Erweiterung aufweist.

9. Schnellspannvorrichtung nach Anspruch 8,
**dadurch gekennzeichnet,**
**dass** die runde Erweiterung als ein Gewindeloch (120g) ausgebildet ist.
